# NEUE EUROPÄISCHE PATENTSCHRIFT

(11) **EP 2 192 458 B2**
(45) Veröffentlichungstag und Bekanntmachung des Hinweises auf die Entscheidung über den Einspruch: **31.12.2014**
(45) Hinweis auf die Patenterteilung: 27.07.2011
(21) Anmeldenummer: 08020699.8
(22) Anmeldetag: 28.11.2008
(51) Int. Cl.: G05B 19/042

(54) **Steuerungskomponente und Verfahren für ein Energiemanagement einer industriellen Automatisierungsanordnung**
Control components and method for energy management in an industrial automation installation
Dispositif de commande et procédé de gestion de l'énergie d'une installation d'automatisation industrielle

(43) Veröffentlichungstag der Anmeldung: 02.06.2010
(73) Patentinhaber: Siemens Aktiengesellschaft, 80333 München (DE)
(72) Erfinder: August, Joachim, 90482 Nürnberg (DE); Brousek, Norbert, 90766 Fürth (DE); Jöhnssen, Oliver, 91058 Erlangen (DE); Ohlmann, Joachim, 91074 Herzogenaurach (DE)

(56) Entgegenhaltungen:
- EP-A1- 1 571 745
- DE-A1- 19 945 686
- DE-C1- 19 615 959
- US-A- 4 146 923
- US-A1- 2003 036 810

## Beschreibung

Die Erfindung betrifft eine Steuerungskomponente für ein Energiemanagement einer industriellen Automatisierungsanordnung gemäß dem Oberbegriff des Patentanspruchs 1, und ein Verfahren zum Betrieb einer Steuerungskomponente gemäß dem Oberbegriff des Patentanspruchs 14.

Solch eine Steuerungskomponente wird in EP19945686 A1 offenbart. Industrielle Automatisierungsanordnungen (auch speicherprogrammierbare Steuerungen - SPS - genannt) bestehen regelmäßig aus einer Vielzahl von Automatisierungskomponenten, welche über ein Datennetz, oft ein Feldbussystem, miteinander verbunden sind. Die Automatisierungskomponenten umfassen beispielsweise Sensoren und Aktoren, wobei insbesondere die letztgenannten Aktoren der Steuerung von industriellen Prozessen, Teil-Prozessen von industriellen Prozessen, Produktionsanlagen o.ä. dienen. Zu den Automatisierungskomponenten gehören auch Steuerungseinrichtungen, beispielsweise CPU's und Controller, welche programmgesteuert zur Verarbeitung der von den Sensoren erfassten Signale dienen und die durch Ansteuerung der Aktoren eine Produktionsanlage oder einen anderen Prozess bzw. Teil-Prozess steuern. Weitere, zentrale Komponenten einer industriellen Automatisierungsanordnung sind beispielsweise übergeordnete Steuerungen, z.B. sog. "MESsysteme" (MES = Manufacturing Execution System), zentrale Stromversorgungen und Energiemanagementsysteme ("TIP" = Totally Integrated Power), Beobachtungs- und Bedienarbeitsplätze, Datenbanken, Kommunikationsmittel, Gateways usw..

Es ist eine zentrale Aufgabe bei der Steuerung einer industriellen Fertigung bzw. eines industriellen Prozesses, möglichst ökonomisch mit den zur Verfügung stehenden Ressourcen umzugehen, insbesondere die Aufnahme an (zumeist elektrischer) Energie zu minimieren. So ist es beispielsweise möglich, zeitweise nicht benötigte Anlagenteile über die entsprechenden Automatisierungskomponenten abzuschalten bzw. in einen Bereitschaftsmodus ("Standby") zu versetzen. Das kann beispielsweise manuell oder zeitgesteuert in Betriebepausen, nachts oder an Sonn-/Feiertagen geschehen.

Neben der Forderung, die gesamte Energieaufnahme einer Automatisierungsanordnung zu verringern, beispielsweise durch Energiesparmaßnahmen, ist es wünschenswert, die sog. Spitzenlast zu verringern, also die in einem Betrachtungszeitraum maximale Energieaufnahme. Der Grund besteht unter anderem darin, dass die Tarifmodelle von Energieversorgern im industriellen Bereich höhere Tarife für die in Spitzenlast bezogene elektrische Energie berechnen, als für eine gleichbleibende "Grundlast". Ein weiterer Grund besteht darin, dass die für die Energieverteilung und Energieversorgung verwendeten technischen Einrichtungen innerhalb ihrer Betriebsgrenzen betrieben werden müssen, so dass Spitzenlasten, die diese Betriebsgrenzen überschreiten, unbedingt vermieden werden müssen. Es daher üblich, in industriellen Automatisierungsanordnungen beim Auftreten einer Spitzenlast-Situation solche Automatisierungskomponenten und damit solche "Verbraucher" temporär abzuschalten, bei denen eine temporäre Abschaltung keinen negativen Einfluss auf die industrielle Fertigung, den industriellen Produktionsprozess o.ä, hat, oder zumindest kein Sicherheitsrisiko darstellt. Diese Strategie wird auch als "spitzenlastgesteuerter Lastabwurf" bezeichnet. So können beispielsweise elektrische Heizungen, die ein Medium in einem Vorratsbehälter auf einer bestimmten Temperatur halten sollen, so lange abgeschaltet werden, so lange die Temperatur des Mediums nicht auf oder unter einen Mindestwert gesunken ist. Ein anderes Beispiel betrifft Pumpen für das Befüllen von Vorratsbehältern, die temporär so lange abgeschaltet werden können oder in ihrer Förderleistung zurückgefahren können, so lange der Füllstand des Vorratsbehälters nicht auf einen Minimalwert abgesunken ist. Entsprechendes gilt für Abwasserpumpen etc..

Das temporäre Abschalten bzw. "Herunterregeln" der Automatisierungskomponenten bzw. der damit gesteuerten Einrichtungen geschieht dabei entweder manuell, oder automatisiert durch eine Steuerungseinrichtung. Im Falle der manuellen Steuerung ergibt sich der Nachteil, dass die steuernde Person eine genaue Kenntnis über die Betriebsgrenzen (beispielsweise minimale Füllstände, minimale Temperaturen etc.), den derzeitigen Betriebszustand (z.B. Füllstand, Temperatur) und die möglichen Betriebszustände (Ein, Aus, Standby, Teillast, Volllast) und die damit jeweils verbundene Energieaufnahme der einzelnen Automatisierungskomponenten haben muss. Diese Angaben müssen von der Bedienperson mit einem Status der gesamten Automatisierungsanordnung, zumeist der aktuellen gesamten Energieaufnahme, und damit verbundene Betriebsgrenzen (z.B. erlaubte Spitzenlast) in Bezug gesetzt werden, was eine hohe Anforderung an die Kenntnis des zu steuernden Prozesses insgesamt und der einzelnen Teil-Prozesse und der damit verbundenen Automatisierungskomponenten stellt. Analoge Anforderungen werden auch an eine automatische Steuerung gestellt, die ebenfalls sowohl die Zustände und Betriebsgrenzen der einzelnen Automatisierungskomponenten, als auch die Zustände und Betriebsgrenzen des zu steuernden Gesamt-Prozesses und damit der gesamten industriellen Automatisierungsanordnung berücksichtigen muss. Aufgrund der Komplexität des Prozesswissens und aufgrund der Tatsache, dass häufig einzelne Automatisierungskomponenten und einzelne Teil-Prozesse geändert werden, ergibt sich nicht nur eine hohe Komplexität dieser Steuerungsaufgabe, sondern auch eine ungewünschte Fehlerhäufigkeit.

Es ist also eine Aufgabe der vorliegenden Erfindung, das Energiemanagement für industrielle Automatisierungsanordnungen zu vereinfachen und im Falle von geänderten Automatisierungskomponenten und Teil-Prozessen diese Änderungen sicher zu berücksichtigen.

Erfindungsgemäß wird dazu vorgeschlagen, das produktionstechnische Wissen über die Prozesse / Teilprozesse bzw. Anlagenteile in der jeweiligen steuernden Automatisierungskomponente selbst vorzuhalten (zu "kapseln") und dabei eine Steuerungskomponente vorzusehen, welche zum Abruf dieses produktionstechnischen Wissens von einer oder mehrerer der Automatisierungskomponenten ausgestaltet ist, so dass durch ein "Aushandeln" geänderter Betriebszustände für die Prozesse/Teil-Prozesse bzw, Anlagenteile das Energiemanagement für die industrielle Automatisierungsanordnung vorgenommen werden kann.

Die Aufgabe wird insbesondere durch eine Steuerungskomponente gemäß dem unabhängigen Patentanspruch 1 und durch ein Verfahren gemäß dem unabhängigen Patentanspruch 14 gelöst.

Vorteilhafte Ausgestaltungen der erfindungsgemäßen Steuerungskomponente sind in den abhängigen Patentansprüchen 2 bis 13 angegeben; die dabei beschriebenen Merkmale und Vorteile gelten sinngemäß auch für das erfindungsgemäße Verfahren.

Die Steuerungskomponente ist vorteilhaft weiterhin zum Empfang und zur Verarbeitung einer Statusmeldung der Automatisierungskomponente eingerichtet, wobei die Statusmeldung Informationen über den jeweiligen (derzeitigen) Betriebszustand und/oder die jeweilige (derzeitige) Energieaufnahme der Automatisierungskomponente umfasst. Dieser wert kann entweder absolut die aufgenommene Leistung angeben oder eine relative Angabe in Bezug auf eine Nennleistung sein. Dadurch wird die Steuerungskomponente in die Lage versetzt, den derzeitigen Betriebszustand mit vorgespeicherten Informationen über die möglichen Betriebszustände zu vergleichen, so dass die Übermittlung von nicht-umsetzbaren Anforderungsmeldungen oder unnötigen Anforderungsmeldungen vermieden werden kann. Dazu ist es weiter vorteilhaft, wenn diese oder eine andere Statusmeldung zumindest eine Angabe über mehrere oder alle die von der Automatisierungskomponente für den Prozess, Teilprozess oder Anlagenteil umschaltbaren Betriebzustände umfasst. Der Abruf einer solchen Statusmeldung kann vorteilhaft dadurch geschehen, dass die Steuerungskomponente dazu eine spezielle Abfragemeldung an die jeweilige Automatisierungskomponente versendet. Dabei ergibt sich eine noch bessere Planbarkeit, wenn die Statusmeldung zumindest für einen der umschaltbaren Betriebszustände eine Angabe über die für die Umschaltung jeweils benötigte Zeitdauer umfasst. Die Planbarkeit wird weiter verbessert, wenn die Statusmeldung alternativ oder zusätzlich für zumindest einen der umschaltbaren Betriebszustände eine Angabe über die maximal mögliche Zeitdauer dieses umzuschaltenden Betriebszustandes umfasst.

Die Steuerungskomponente und das damit durchführbare Verfahren lassen sich besonders einfach in bestehenden Automatisierungsanordnungen realisieren, wenn die Steuerungskomponente als eine Software oder als ein Software-Plug-In eines Energiemanagementsystems oder einer Energieversorgungseinrichtung ausgebildet ist.

Dabei kann eine vorhandene Infrastruktur ohne das Erfordernis, neue Hardware anzuschaffen, genutzt werden, wenn die Steuerungskomponente zur Verwendung eines ohnehin vorhandenen Datenübertragungssystems, beispielsweise eines Feldbussystems, als das Kommunikationsmittel eingerichtet ist.

Eine einfache Anwendung des Verfahrens und der Steuerungskomponente mit Automatisierungskomponenten unterschiedlicher Hersteller ergibt sich, wenn die Steuerungskomponente zur Verwaltung von standardisierten Betriebszuständen für die Automatisierungskomponenten bzw, die damit gesteuerten Prozesse, Teil-Prozesse oder Anlagenteile eingerichtet ist. Dadurch kann das Kommunikationsprotokoll zwischen der Steuerungskomponente und den zu steuernden Automatisierungskomponenten derart vereinfacht werden, dass sich kurze und eindeutige Befehle und Meldungen ergeben, wodurch das zusätzliche Datenaufkommen minimiert wird. Vorteilhaft umfassen die standardisierten Betriebszustände zumindest einen Volllast-Betrieb, einen Teillast-Betrieb, einen Pausen-Betriebszustand und/oder einen Modus für eine zeitbegrenzte maximale Energieeinsparung. Somit lassen sich die wichtigsten Betriebszustände durch einfache Meldungen abdecken.

Für ein möglichst umfassendes Energiemanagement ist die Steuerungskomponente vorteilhafter Weise für einen Betrieb in einer Automatisierungsanordnung mit einer Mehrzahl an Automatisierungskomponenten und dementsprechend einer Mehrzahl von Prozessen, Teil-Prozessen oder Anlagenteilen eingerichtet, wobei die Steuerungskomponente zur Übermittlung jeweils einer Meldung mit einer Anforderung an mehrere oder jede Automatisierungskomponente in einer anhand einer Priorisierungs-Tabelle festgelegten Reihenfolge oder in einer anhand einer Priorisierungs-Regel festgelegten Reihenfolge eingerichtet ist. Durch die Beachtung einer solchen Tabelle oder Regel können verschiedene Strategien realisiert werden, beispielsweise, dass vorwiegend unkritische Prozesse in das Energiemanagement einbezogen werden, oder aber, dass insbesondere Prozesse oder Anlagenteile mit schnellen Reaktionszeiten bevorzugt gesteuert werden. Dabei kann sich die Steuerungskomponente flexibel an den jeweiligen Zustand des Produktionsprozesses o.ä. anpassen, wenn die Inbezugsetzung nach Eingang und Berücksichtigung mehrerer oder aller Quittierungsmeldungen erfolgt.

Eine Verbesserung der Steuerungs-Strategie setzt voraus, dass aus vorangegangenen Steuerungs-Aktionen gelernt werden kann. Dazu ist die Steuerungskomponente vorteilhaft zur Dokumentation der von diesen übermittelten Meldungen mit den Anfragen und der dazu empfangenen Quittierungsmeldungen und/oder der empfangenen Statusmeldungen eingerichtet.

Ausführungsbeispiele der erfindungsgemäßen Steuerungskomponente werden nachfolgend anhand der Zeichnungen erläutert. Sie dienen gleichzeitig der Erläuterung eines erfindungsgemäßen Verfahrens.

Dabei zeigen:
- Figur 1: in schematischer Darstellung eine Automatisie- rungsanordnung mit einer Energieversorgung, einem Energiemanagement, einer Planungsinstanz und Teilprozessen,
- Figur 2: in schematischer Darstellung den beispielhaften Aufbau von Meldungen mit Anfragen, Quittierungs- meldungen und Statusmeldungen,
- Figur 3: eine beispielhafte Erläuterung von verschiedenen Bits ("Flags") in den Meldungen, und
- Figur 4: eine Planungstabelle der Planungsinstanz.

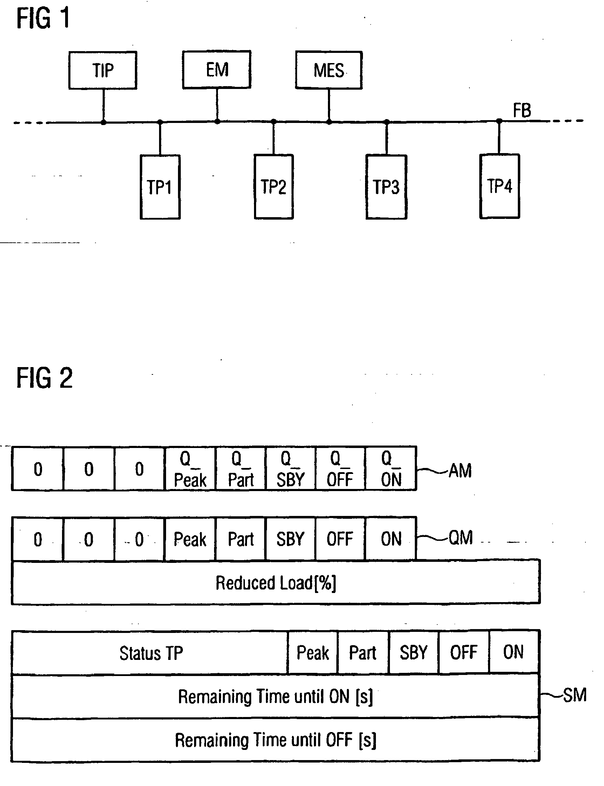

In der Figur 1 ist als industrielle Automatisierungsanordnung eine Produktionsanlage schematisch dargestellt, in der über ein Datennetz FB (Feldbussystem) Automatisierungskomponenten TP1, ..., TP4 (Teilprozesse) angeordnet sind, wobei die Automatisierungskomponenten TP1, ..., TP4 jeweils einen zu steuernden Teilprozess repräsentieren. Dies bedeutet, dass der jeweilige Teilprozess durch die jeweilige Automatisierungskomponente TP1, ..., TP4 gesteuert wird. Weiter sind mittels des Datennetzes FB und mittels nicht dargestellter Infrastruktur (beispielsweise Energieversorgungsleitungen) die Energieversorgung TIP ("Totally Integrated Power"), eine Einrichtung zum Energiemanagement EM mit einer Steuerungskomponente und eine Planungsinstanz MES ("Manufacturing Execution System") in die Automatisierungsanordnung integriert.

Die Steuerungskomponente ist dabei zum meldungsbasierten Austausch von Steuerungs- und Zustandsdaten, die die Einstellungen eines in den Automatisierungskomponenten TP1, .-, TP4 jeweils integrierten Energiesparprofils betreffen, eingerichtet. Dieses Energiesparprofil kann als ein Satz unterschiedlicher und vorzugsweise standardisierter Betriebszustände betrachtet werden, wobei die Standardisierung im vorliegenden Ausführungsbeispiel sowohl die Betriebszustände selbst, als auch die diese betreffende meldungs- oder register-basierte Steuerung betrifft. Dabei ist in der vorliegenden Ausführungsform die Steuerungskomponente in der Einrichtung zum Energiemanagement EM als ein Software-Plug-In integriert; alternativ kann sie auch als eigenständiges Gerät ausgeführt sein oder auch als Software oder als Software-Plug-In innerhalb anderer Komponenten integriert sein, insbesondere in der Energieversorgung TIP oder in der Planungsinstanz MES. Die Steuerungskomponente kann insbesondere aber auch so ausgestaltet sein, dass diese selbst das Energiemanagement für die Automatisierungsanordnung durchführt; in diesem Fall wären die Begriffe "Steuerungskomponente" und "Energiemanagement" Synonyme.

Im Folgenden soll exemplarisch angenommen werden, dass die Automatisierungskomponente TP1 als einen Teilprozess einen Kompressor steuert, welcher einen für die Produktionsanlage wichtigen Druckluft-vorratsbehälter befüllt. Dabei soll mittels der Steuerungseigenschaften der Automatisierungskomponente TP1 der Druck dieses Vorratsbehälters zwischen einem Minimalwert und einem Maximalwert gehalten werden. Dazu ist der Kompressor in seiner Drehzahl steuerbar, so dass dessen Pumpleistung und somit auch dessen Energieaufnahme (Aufnahme an elektrischer Leistung von der Energieversorgung TIP) stufenlos geregelt werden kann.

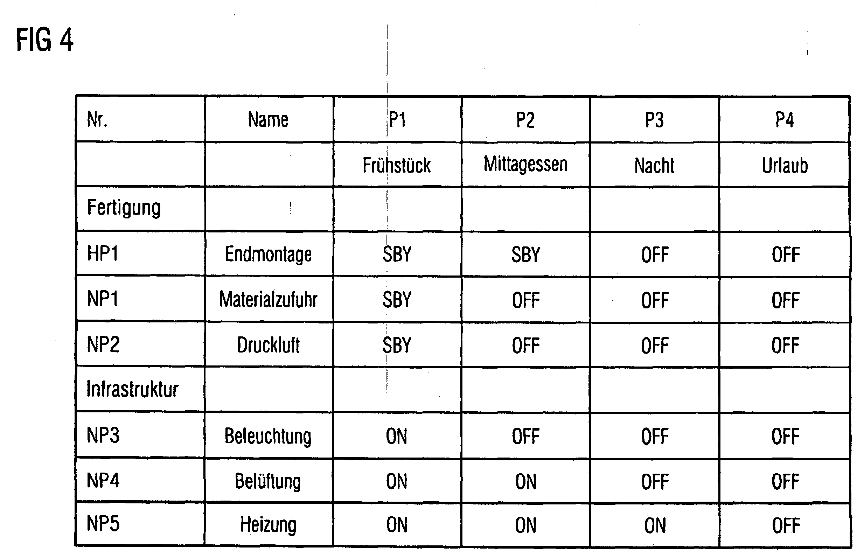

Die Energieversorgung TIP überdacht kontinuierlich die von der gesamten Produktionsanlage aufgenommene elektrische Leistung und stellt diesen Wert kontinuierlich über das Datennetz FB dem Energiemanagement EM und damit der Steuerungskomponente zur Verfügung. Weiterhin wird das Energiemanagement EM ebenfalls über das Datennetz FB von der Planungsinstanz MES mit Plandaten über eine Fertigung des Produktionsanlage versorgt; solche Plandaten sind exemplarisch in der Figur 4 dargestellt.

Alternativ kann auch die Energieaufnahme weniger oder auch nur eines einzigen Teilprozesses betrachtet werden; dies setzt das Vorhandensein entsprechend differenzierter Messeinrichtungen voraus. In einem weiteren alternativen Ausführungsbeispiel kann die derzeitige, die minimale und/oder die maximale Energieaufnahme eines Teilprozesses oder Anlagenteils, auch mittels Abfragemeldungen aus der entsprechenden Automatisierungskomponente TP1, ..., TP4 ausgelesen werden; dadurch können Messmittel eingespart werden.

Die Steuerungskomponente des Energiemanagements EM ist derart ausgestaltet, dass in den Fällen, in denen sich die aufgenommene elektrische Leistung der Produktionsanlage oder der betrachteten Teil-Produktionsanlage einem ersten Grenzwert nähert oder diesen überschreitet, solche Prozesse und Teilprozesse in ihrer Leistung heruntergeregelt werden sollen, die nicht ständig mit einer gleichmäßigen Last betrieben werden müssen. Dies ist bei dem Kompressor der Fall, welcher durch die Automatisierungskomponente TP1 gesteuert wird. Sofern der Druck in dessen Vorratsbehälter oberhalb des Minimaldrucks liegt, kann die Förderleistung des Kompressors und damit dessen Energieaufnahme gesenkt oder sogar ganz abgeschaltet werden. Um dies zu erreichen, kommuniziert die Steuerungskomponente mit der Automatisierungskomponente TP1 mittels eines standardisierten Protokolls. Dazu versendet das Energiemanagement EM eine standardisierte Meldung, nämlich die Anfragemeldung AM zu der Automatisierungskomponente TP1.

In der Figur 2 ist der Aufbau der Anforderungsmeldungen AM, der Quittierungsmeldungen QM und der Statusmeldungen SM schematisch dargestellt. Im einfachsten Fall umfasst die Payload der Anfragemeldung AM nur ein Byte, in welchem das Bit mit der Bezeichnung "Q_part" die Automatisierungskomponente TP1 bzw. den dadurch gesteuerten Teilprozess in einen Betriebszustand wechseln lassen soll, welcher einem Teillastbetrieb ("Part") entspricht. Die Anfragemeldung AM kann optional (nicht dargestellt) noch zwei weitere Bytes umfassen, welche einen Prozentwert für die angestrebte Lastreduzierung angeben; alternativ kann auch mit Absolutwerten oder Leistungsklassen/Leistungsstufen gearbeitet werden. Die Automatisierungskomponente TP1 antwortet mit einer Quittierungsmeldung QM, welche ebenfalls in der Figur 2 schematisch dargestellt ist und welche vorzugsweise ebenfalls durch das Setzen einzelner Bits in standardisierter Weise Auskunft über die Umsetzung oder Nicht-Umsetzung der Anfragemeldung AM gibt. Im vorliegenden Fall ist in dieser Quittierungemeidung QM das vierte Bit "Part" gesetzt, wodurch die Automatisierungskomponente TP1 die Umschaltung in den Teillastbetrieb des Kompressors bestätigt. In zwei weiteren Bytes gibt die Quittierungsmeldungen QM auch noch Auskunft darüber, um welchen Prozentsatz die aufgenommene Leistung reduziert werden konnte, beispielsweise 50%. Weiterhin können mit der Quittierungsmeldung QM oder, wie hier, mit einer separaten Statusmeldung SM zeitliche Angaben über die Umschaltung gemacht werden. So ist die Zeitdauer bis zur Umschaltung ("remaining time until on") im vorliegenden Fall zu Null gesetzt, weil die Umschaltung bereits stattgefunden hat. Bei der Rückfallzeit ("remaining time until off") handelt es sich um diejenige von der Automatisierungskomponente TP1 prognostizierte Zeit, die bis zum erneuten Wechsel des Betriebszustandes (hier; in den Volllastbetrieb) verstreichen wird. Dazu übergreift die Automatisierungskomponente TP1 nicht nur vor dem Umschalten in den Teillastbetrieb, ob der Druck des Druckbehälters oberhalb der minimalen Grenze liegt, sondern betrachtet auch den Druckgradienten (Druckabfall pro Zeiteinheit), um das Erreichen des Minimaldrucks bei der derzeitigen reduzierten Förderleistung des Kompressors zu errechnen. Durch diese Maßnahmen wird verhindert, dass die von dem Energiemanagement EM geforderte Reduzierung der Energieaufnahme des Teilprozesses zu einem nichtgewollten Zustand (hier: Minderdruck) führt.

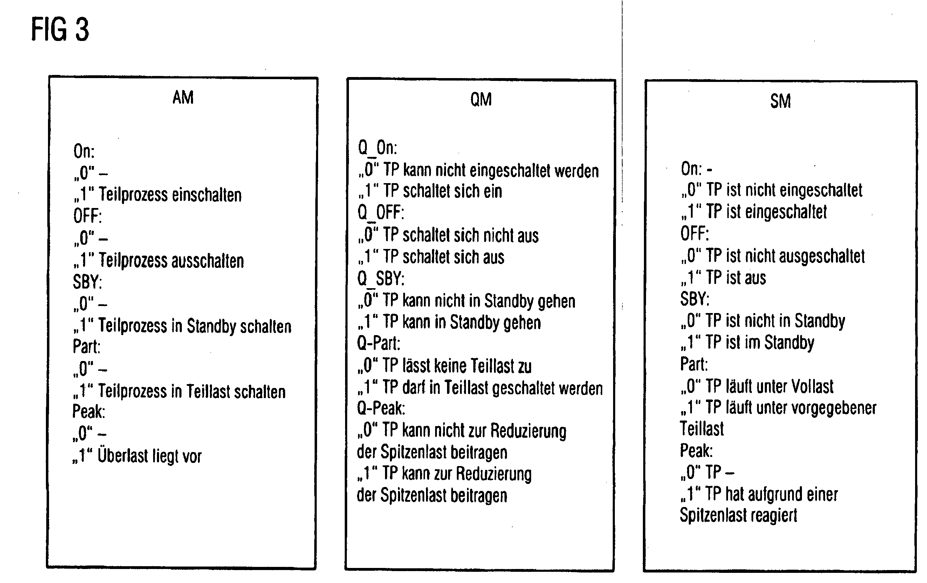

Die Bedeutungen der einzelnen Bits in den Meldungen sind in der Figur 3 tabellarisch dargestellt. Selbstverständlich können auch andere Konventionen über den Meldungsaustausch, insbesondere auch text- oder variablengestützte Anweisungen, vereinbart sein. Insbesondere muss der Informationstransport zwischen der Steuerungskomponente und damit dem Energiemanagement EM und dem Automatisierungskomponenten TP1, ..., TP4 gar nicht mittels Meldungen geschehen, sondern es können auch in einer gemeinsamen Datenbank oder in einem sonstigen Informationsspeicher die entsprechenden Datenworte (Bytes) jeweils zugreifbar bzw. zumindest lesbar gespeichert sein. Dies gilt insbesondere für sog. "global Variablen" des Produktionsprozesses.

Anstelle der beschriebenen prozentualen Lastangaben können, insbesondere für die eingesparte elektrische Leistung, auch absolute Werte, beispielsweise in der Einheit "Kilowatt", verwendet werden.

In der Figur 4 ist exemplarisch eine tabellarische Produktplanung der Planungsinstanz MES dargestellt. Vorteilhaft werden solche Plandaten von der Steuerungskomponente des Energiemanagements EM dazu verwendet, eine Priorisierung bei der Übermittlung von Anfragemeldungen AM vorzunehmen. Das heißt, dass nicht nur die starren Vorgaben aus diesen Tabellen (beispielsweise das Abschalten einer Beleuchtung in Betriebspausen) mittels der durch das Energiemanagement EM versendeten Anfragemeldung AM realisiert wird, sondern auch, dass beispielsweise in Betriebspausen, in denen die gesamte Aufnahme an elektrischer Leistung ohnehin gering ist, solche Prozesse wie der exemplarisch betrachtete Druckspeicher in den Betriebszustand "Volllast" umgeschaltet werden, um nach der Betriebspause mit maximalem Vorrat an Druckluft wiederum zu einer Entlastung der Energieversorgung TIP bereit zu stehen. Dadurch, dass durch das Energiemanagement EM eine Vielzahl von Automatisierungskomponenten TP1, ,..., TP4 und die damit verbundenen Teilprozesse gesteuert werden können, kann das Energiemanagement EM zielgenau und global die Einsparung der notwendigen Energieaufnahme aushandeln bzw. zu einer zeitlichen Nivellierung der Energieaufnahme beitragen. Dazu trägt insbesondere der Betriebszustand "Überlast" ("Peak") bei, bei dem die jeweilige Automatisierungskomponente zum sofortigen "Abwurf" einer maximalen Last aufgefordert wird. Im Falle dies exemplarisch betrachteten Kompressors heißt dass, diesen solange vollständig abzuschalten, bis ein Minimaldruck erreicht worden ist.

Vorteilhaft ist die Automatisierungskomponente TP1, TP4 dazu eingereichtet, mittels einer speziellen Statusmeldung SM eine (in den Figuren nicht dargestellte) Liste mit allen verfügbaren Betriebszuständen (hier: ein, aus, Standby, Teillast, Volllast) zu übermitteln, wobei optional diese Liste jeweils Zeitangaben über eine durchschnittliche Reaktionszeit, die zur Einschaltung des jeweiligen Betriebszustandes benötigt wird, umfasst. Damit können insbesondere neu in die Produktionsanlage integrierte Einrichtungen automatisch durch das Energiemanagement EM und damit durch die Steuerungskomponente berücksichtigt werden. Statusmeldungen SM können entweder auf Anfrage übermittelt werden, oder aber selbsttätig durch die jeweilige Automatisierungskomponente TP1, ..., TP4. Die selbsttätige Übertragung findet insbesondere dann statt, wenn sich ein Betriebszustand der jeweiligen Automatisierungskomponente TP1, ..., TP4 geändert hat. Auch eine selbsttätige Übertragung in festgelegten zeitlichen Abständen ist dabei einstellbar.

## Patentansprüche

1. Steuerungskomponente für ein Energiemanagement (EM) einer industriellen Automatisierungsanordnung,
wobei die Steuerungskomponente und zumindest eine zu steuernde Automatisierungskomponente (TP1, ..., TP4) der Automatisierungsanordnung über Kommunikationsmittel (FB) vernetzt sind, und
wobei die Automatisierungskomponente (TP1, ..., TP4) zur Steuerung eines Prozesses, eines Teil-Prozesses oder eines Anlagenteils der Automatisierungsanordnung ausgebildet ist, **dadurch gekennzeichnet,**
**dass** die Steuerungskomponente zur Erfassung einer Energieaufnahme zumindest eines Teils der Automatisierungsanordnung eingerichtet ist,
**dass** die Steuerungskomponente zur Inbezugsetzung der erfassten Energieaufnahme mit zumindest einer gespeicherten Vorgabe ausgebildet ist,
**dass** die Steuerungskomponente zur Generierung einer Anforderung an zumindest eine Automatisierungskomponente (TP1, ..., TP4) als Resultat der Inbezugsetzung eingerichtet ist,
**dass** die Steuerungskomponente zur Übermittlung einer Meldung mit der Anforderung an die zumindest eine Automatisierungskomponente (TP1, ..., TP4) und zum Empfang einer Quittierungsmeldung von dieser Automatisierungskomponente (TP1, ..., TP4) ausgebildet ist, wobei
die Anforderung auf den Wechsel eines Betriebszustandes des von der Automatisierungskomponente (TP1, ..., TP4) gesteuerten Prozesses, Teil- Prozesses oder Anlagenteils gerichtet ist, und
**dass** die Steuerungskomponente zur Berücksichtigung von Erfahrungen aus vorangegangenen Steuerungs-Aktionen anhand dabei dokumentierter Anforderungen und der dazu empfangenen Quittierungsmeldungen und/oder der empfangenen Statusmeldungen eingerichtet ist.

2. Steuerungskomponente nach Patentanspruch 1,
**dadurch gekennzeichnet,**
**dass** die Steuerungskomponente zum Empfang und zur Verarbeitung einer Statusmeldung der Automatisierungskomponente (TP1, ..., TP4) eingerichtet ist, wobei die Statusmeldung Informationen über den jeweiligen Betriebszustand und/oder die jeweilige Energieaufnahme der Automatisierungskomponente (TP1, ..., TP4) umfasst.

3. Steuerungskomponente nach einem der vorhergehenden Patentansprüche,
**dadurch gekennzeichnet,**
**dass** die Steuerungskomponente als eine Software oder als ein Software-Plug-In eines Energiemanagementsystems oder einer Energieversorgungseinrichtung der Automatisierungsanordnung ausgebildet ist.

4. Steuerungskomponente nach einem der vorhergehenden Patentansprüche,
**dadurch gekennzeichnet,**
**dass** die Steuerungskomponente zur Verwendung eines Feldbussystems als das Kommunikationsmittel (FB) eingerichtet ist.

5. Steuerungskomponente nach einem der vorhergehenden Patentansprüche,
**dadurch gekennzeichnet,**
**dass** die Steuerungskomponente zur Verwaltung von standardisierten Betriebszuständen für die Automatisierungskomponente (TP1, ..., TP4) eingerichtet ist.

6. Steuerungskomponente nach Patentanspruch 5,
**dadurch gekennzeichnet,**
**dass** die standardisierten Betriebszustände einen Volllast-Betrieb, einen Teillast-Betrieb, einen Pausen-Betriebszustand und/oder einen Modus für eine zeitbegrenzte maximale Energieeinsparung umfassen.

7. Steuerungskomponente nach einem der vorherigen Patentansprüche,
**dadurch gekennzeichnet,**
**dass** die Steuerungskomponente für einen Betrieb in einer Automatisierungsanordnung mit einer Mehrzahl an Automatisierungskomponenten (TP1, ..., TP4) zur Steuerung einer Mehrzahl von Prozessen, Teil-Prozessen oder Anlagenteilen eingerichtet ist, wobei die Steuerungskomponente zur Übermittlung jeweils einer Meldung mit einer Anforderung an jeweils eine Automatisierungskomponente (TP1, ..., TP4) in einer anhand einer Priorisierungs-Tabelle festgelegten Reihenfolge oder in einer anhand einer Priorisierungs-Regel festgelegten Reihenfolge an zumindest zwei der Automatisierungskomponenten (TP1, ..., TP4) eingerichtet ist.

8. Steuerungskomponente nach Patentanspruch 7,
**dadurch gekennzeichnet,**
**dass** die Inbezugsetzung nach Eingang mehrerer oder aller der jeweiligen Quittierungsmeldungen und unter gleichzeitiger Berücksichtigung dieser mehreren oder aller Quittierungsmeldungen erfolgt.

9. Steuerungskomponente nach einem der vorhergehenden Patentansprüche,
**dadurch gekennzeichnet,**
**dass** die Steuerungskomponente zur Dokumentation der von dieser übermittelten Meldungen mit den Anfragen und der empfangenen Quittierungsmeldungen und/oder der empfangenen Statusmeldungen eingerichtet ist.

10. Steuerungskomponente nach einem der vorhergehenden Patentansprüche,
**dadurch gekennzeichnet,**
**dass** die Statusmeldung zumindest eine Angabe über mehrere oder alle die von der Automatisierungskomponente (TP1, ..., TP4) für den Prozess, Teil-Prozess oder Anlagenteil umschaltbaren Betriebszustände umfasst.

11. Steuerungskomponente nach Patentanspruch 10,
**dadurch gekennzeichnet, dass**
die Steuerungskomponente zum Abruf der Statusmeldung mit der zumindest einen Angabe über die umschaltbaren Betriebszustände mittels einer dazu ausgestalteten Abfragemeldung eingerichtet ist.

12. Steuerungskomponente nach Patentanspruch 10 oder 11, **dadurch gekennzeichnet, dass**
die Statusmeldung zumindest für einen der umschaltbaren Betriebszustände eine Angabe über die für eine Umschaltung jeweils benötigte Zeitdauer umfasst.

13. Steuerungskomponente nach einem der Patentansprüche 10 bis 12,
**dadurch gekennzeichnet,**
**dass** die Statusmeldung für zumindest einen der umschaltbaren Betriebszustände eine Angabe über die maximal mögliche Zeitdauer dieses Betriebszustandes umfasst.

14. Verfahren für den Betrieb einer Steuerungskomponente für das Energiemanagement einer industriellen Automatisierungsanordnung,
wobei in der Automatisierungsanordnung zumindest eine Automatisierungskomponente (TP1, ..., TP4) mit zumindest zwei umschaltbaren und sich hinsichtlich ihrer Energieaufnahme unterscheidenden Betriebszuständen eines von ihr gesteuerten Prozesses, Teil-Prozesses oder Anlagenteils angeordnet ist, **dadurch gekennzeichnet, dass**
- in einem ersten Schritt durch die Steuerungskomponente die Energieaufnahme zumindest eines Teils der Automatisierungsanordnung mittelbar oder unmittelbar erfasst wird,
- in einem zweiten Schritt die Steuerungskomponente die erfasste Energieaufnahme mit einem Sollwert oder einem Grenzwert in Bezug setzt,
- in einem dritten Schritt die Steuerungskomponente anhand der Inbezugsetzung eine Anforderungsmeldung mit einer Anforderung für den Wechsel des Betriebszustandes des Prozesses, des Teil-Prozesses oder des Anlagenteils generiert und an die Automatisierungskomponente (TP1, ..., TP4) versendet,
- in einem vierten Schritt die Steuerungskomponente eine Quittierungsmeldung der Automatisierungskomponente (TP1, ..., TP4) empfängt, wobei diese Quittierungsmeldung zumindest eine Angabe darüber umfasst, ob der mittels der Anforderungsmeldung geforderte Wechsel des Betriebszustandes umsetzbar ist, und
- in einem fünften Schritt durch die Automatisierungskomponente (TP1, ..., TP4) der Betriebszustand geändert wird, und
dass durch die Steuerungskomponente eine Berücksichtigung von Erfahrungen aus vorangegangenen Steuerungs-Aktionen anhand dabei dokumentierter Anforderungen und der dazu empfangenen Quittierungsmeldungen und/oder der empfangenen Statusmeldungen erfolgt.

## Claims

1. Control component for an energy management unit (EM) in an industrial automation arrangement,
the control component and at least one automation component (TP1, ..., TP4) to be controlled in the automation arrangement being networked via communication means (FB), and
the automation component (TP1, ..., TP4) being designed to control a process, a subprocess or a system part of the automation arrangement,
**characterized**
**in that** the control component is set up to detect the energy consumption of at least one part of the automation arrangement, in that the control component is designed to relate the detected energy consumption to at least one stored specification,
**in that** the control component is set up to generate a request for at least one automation component (TP1, ..., TP4) as the result of the relating operation,
**in that** the control component is designed to transmit a message containing the request to the at least one automation component (TP1, ..., TP4) and to receive an acknowledgement message from this automation component (TP1, ..., TP4),
the request being aimed at changing an operating state of the process, subprocess or system part controlled by the automation component (TP1, ..., TP4),
and
**in that** the control component is set up to take into account experiences from previous control actions on the basis of documented requests and the received acknowledgement messages and/or the received status messages.

2. Control component according to Patent Claim 1, **characterized in that**
the control component is set up to receive and process a status message from the automation component (TP1, ..., TP4), the status message comprising information relating to the respective operating state and/or the respective energy consumption of the automation component (TP1, ..., TP4).

3. Control component according to one of the preceding patent claims,
**characterized in that**
the control component is in the form of software or a software plug-in of an energy management system or an energy supply device in the automation arrangement.

4. Control component according to one of the preceding patent claims,
**characterized in that**
the control component is set up to use a field bus system as the communication means (FB).

5. Control component according to one of the preceding patent claims,
**characterized in that**
the control component is set up to manage standardized operating states for the automation component (TP1, ..., TP4).

6. Control component according to Patent Claim 5, **characterized in that**
the standardized operating states include full load operation, partial load operation, a pause operating state and/or a mode for a time-limited maximum energy saving.

7. Control component according to one of the preceding patent claims,
**characterized in that**
the control component is set up for operation in an automation arrangement having a plurality of automation components (TP1, ..., TP4) for controlling a plurality of processes, subprocesses or system parts, the control component being set up to transmit a respective message containing a request for a respective automation component (TP1, ..., TP4) to at least two of the automation components (TP1, ..., TP4) in an order defined using a prioritization table or in an order defined using a prioritization rule.

8. Control component according to Patent Claim 7,
**characterized in that**
the relating operation is carried out after a plurality of or all of the respective acknowledgement messages have been received and while simultaneously taking into account this plurality of or all of the acknowledgement messages.

9. Control component according to one of the preceding patent claims,
**characterized in that**
the control component is set up to document the messages containing the requests, which have been transmitted by it, and to document the received acknowledgement messages and/or the received status messages.

10. Control component according to one of the preceding patent claims,
**characterized in that**
the status message includes at least one statement relating to a plurality of or all of the operating states which can be changed over by the automation component (TP1, ..., TP4) for the process, subprocess or system part.

11. Control component according to Patent Claim 10,
**characterized in that**
the control component is set up to retrieve the status message containing the at least one statement relating to the operating states which can be changed over using an interrogation message designed for this purpose.

12. Control component according to Patent Claim 10 or 11,
**characterized in that**
the status message includes, at least for one of the operating states which can be changed over, a statement relating to the period of time respectively needed for a changeover operation.

13. Control component according to one of Patent Claims 10 to 12,
**characterized in that**
the status message includes, for at least one of the operating states which can be changed over, a statement relating to the maximum possible duration of this operating state.

14. Method for operating a control component for the energy management unit in an industrial automation arrangement,
at least one automation component (TP1, ..., TP4) with at least two operating states of a process, subprocess or system part controlled by it, which operating states can be changed over and differ in terms of their energy consumption, being arranged in the automation arrangement,
**characterized in that**,
- in a first step, the control component directly or indirectly detects the energy consumption of at least one part of the automation arrangement,
- in a second step, the control component relates the detected energy consumption to a desired value or a limit value,
- in a third step, the control component uses the relating operation to generate a request message containing a request to change the operating state of the process, the subprocess or the system part and sends said message to the automation component (TP1, ..., TP4),
- in a fourth step, the control component receives an acknowledgement message from the automation component (TP1, ..., TP4), this acknowledgement message including at least one statement relating to whether the operating state can be changed, as required using the request message, and,
- in a fifth step, the automation component (TP1, ..., TP4) changes the operating state,
and
**in that** the control component takes into account experiences from previous control actions on the basis of documented requests and the received acknowledgement messages and/or the received status messages.

## Revendications

1. Composant de commande pour une gestion ( EM ) d'énergie d'une installation d'automatisation industrielle,
dans lequel le composant de commande et au moins un composant ( TP1, ..., TP4 ) d'automatisation à commander du dispositif d'automatisation sont mis en réseau par des moyens ( FB ) de communication, et
dans lequel le composant ( TP1, ..., TP4 ) d'automatisation est constitué pour la commande d'un processus, d'un processus partiel ou d'une partie du système de l'installation d'automatisation,
**caractérisé**
**en ce que** le composant de commande est conçu pour la détection d'une absorption d'énergie d'au moins une partie de l'installation d'automatisation,
**en ce que** le composant de commande est constitué pour la mise en rapport de l'absorption d'énergie détectée avec au moins une prescription mémorisée,
**en ce que** le composant de commande est conçu pour produire une demande au au moins un composant ( TP1, ..., TP4 ) d'automatisation en résultat de la mise en rapport,
**en ce que** le composant de commande est constitué pour la transmission d'un message avec la demande au au moins un composant ( TP1, ..., TP4 ) d' automatisation et pour la réception d'un message d'accusé de réception de ce composant ( TP1, ..., TP4 ) d'automatisation, dans lequel
la demande vise le changement d'un état de fonctionnement du processus, du processus partiel ou d'une partie du système commandé par le composant ( TP1, ..., TP4 ) d' automatisation, et en ce que le composant de commande est conçu pour tenir compte des pratiques des actions de commande précédentes au moyen de demandes documentées et des messages d'accusé de réception reçus à cet effet et/ou des messages d'état reçus.

2. Composant de commande suivant la revendication 1,
**caractérisé**
**en ce que** le composant de commande est conçu pour la réception et le traitement d'un message de statut du composant ( TP1, ..., TP4 ) d' automatisation, le message de statut comprenant des informations sur l'état de fonctionnement respectif et/ou sur l'absorption d'énergie respective du composant ( TP1, ..., TP4 ) d' automatisation.

3. Composant de commande suivant l'une des revendications précédentes,
**caractérisé**
**en ce que** le composant de commande est constitué sous la forme d'un logiciel ou d'un logiciel plug-in d'un système de gestion d'énergie ou d'un dispositif d'alimentation en énergie de l'installation d'automatisation.

4. Composant de commande suivant l'une des revendications précédentes,
**caractérisé**
**en ce que** le composant de commande est conçu pour l'utilisation d'un système de bus de champ comme moyen ( FB ) de communication.

5. Composant de commande suivant l'une des revendications précédentes,
**caractérisé**
**en ce que** le composant de commande est conçu pour la gestion d'états de fonctionnement normalisés du composant ( TP1, ..., TP4 ) d' automatisation.

6. Composant de commande suivant la revendication 5,
**caractérisé**
**en ce que** les états de fonctionnement normalisés comprennent un fonctionnement à pleine charge, un fonctionnement en charge partielle, un état de fonctionnement en arrêt et/ou un mode pour une économie d'énergie maximum limitée dans le temps.

7. Composant de commande suivant l'une des revendications précédentes,
**caractérisé**
**en ce que** le composant de commande est conçu pour un fonctionnement dans une installation d'automatisation ayant une pluralité de composants ( TP1, ..., TP4 ) d'automatisation pour la commande d'une pluralité de processus, de processus partiels ou de parties de système, le composant de commande étant conçu pour la transmission respectivement d'un message ayant une demande à respectivement un composant ( TP1, ..., TP4 ) d'automatisation, suivant un ordre fixé au moyen d'un tableau de priorité ou suivant un ordre fixé au moyen d'une règle de priorité, à au moins deux composants ( TP1, ..., TP4 ) d' automatisation.

8. Composant de commande suivant la revendication 7,
**caractérisé**
**en ce que** la mise en rapport s'effectue après l'entrée de plusieurs ou de tous les messages d'accusé de réception respectifs et en tenant compte simultanément de ces plusieurs messages d'accusé de réception ou de tous ces messages d'accusés de réception.

9. Composant de commande suivant l'une des revendications précédentes,
**caractérisé**
**en ce que** le composant de commande est conçu pour la mise en documentation des messages transmis par celui-ci avec les demandes et les messages d'accusés de réception et/ou les messages de statut reçus.

10. Composant de commande suivant l'une des revendications précédentes,
**caractérisé**
**en ce que** le message de statut comprend au moins une indication sur plusieurs ou tous les états de fonctionnement commutables par les composants ( TP1, ..., TP4 ) d'automatisation pour le processus, le processus partiel ou la partie de système.

11. Composant de commande suivant la revendication 10,
**caractérisé**
**en ce que** le composant de commande est conçu pour appeler le message de statut ayant au moins une indication sur les états de fonctionnement commutables au moyen d'un message d'interrogation conformé à cet effet.

12. Composant de commande suivant la revendication 10 ou 11,
**caractérisé**
**en ce que** le message de statut comprend, au moins pour l'un des états de fonctionnement commutables, une indication sur la durée nécessaire respectivement pour une commutation.

13. Composant de commande suivant l'une des revendications 10 à 12,
**caractérisé**
**en ce que** le message de statut comprend, pour au moins l'un des états de fonctionnement commutables, une indication sur la durée maximum possible de cet état de fonctionnement.

14. Procédé pour faire fonctionner un composant de commande pour la gestion de l'énergie d'une installation d'automatisation industrielle,
dans lequel il est disposé dans l'installation d'automatisation au moins un composant ( TP1, ..., TP4 ) d'automatisation, ayant au moins deux états de fonctionnement commutables et différents du point de vue de leur absorption d'énergie, d'un processus, d'un processus partiel ou d'une partie d'un système qu'il commande
**caractérisé en ce que**
- dans un premier stade on détecte directement ou indirectement par le composant de commande l'absorption d'énergie d'au moins une partie de l'installation d'automatisation,
- dans un deuxième stade le composant de commande met l'absorption d'énergie détectée en rapport avec une valeur de consigne ou avec une valeur limite,
- dans un troisième stade le composant de commande produit au moyen de la mise en rapport un message de demande comprenant une demande de changement de l'état de fonctionnement du processus, du processus partiel ou de la partie du système et l'envoie au composant ( TP1, ..., TP4 ) d'automatisation,
- dans un quatrième stade le composant de commande reçoit un message d'accusé de réception du composant ( TP1, ..., TP4 ) d'automatisation, ce message d'accusé de réception comprenant au moins une indication sur le point de savoir si le changement de l'état de fonctionnement demandé à l'aide du message de demande peut être réalisé, et
- dans un cinquième stade l'état de fonctionnement est modifié par le composant ( TP1, ..., TP4 ) d'automatisation, et
**en ce qu'**il est effectué par le composant de commande une prise en compte des pratiques d'actions de commande précédentes au moyen de demandes documentées et des messages d'accusé de réception reçus à cet effet et/ou des messages d'état reçus.
